# EUROPEAN PATENT SPECIFICATION

(11) **EP 4 239 503 B1**
(45) Date of publication and mention of the grant of the patent: **27.05.2026**
(21) Application number: 20959924.0
(22) Date of filing: 02.11.2020
(51) Int. Cl.: G06F 21/10, G06F 21/57

(54) **APPROVAL CONTROL SYSTEM, APPROVAL CONTROL DEVICE, APPROVAL CONTROL METHOD, AND PROGRAM**
GENEHMIGUNGSSTEUERUNGSSYSTEM, GENEHMIGUNGSSTEUERUNGSVORRICHTUNG, GENEHMIGUNGSSTEUERUNGSVERFAHREN UND PROGRAMM
SYSTÈME DE COMMANDE D'APPROBATION, DISPOSITIF DE COMMANDE D'APPROBATION, PROCÉDÉ DE COMMANDE D'APPROBATION, ET PROGRAMME

(43) Date of publication of application: 06.09.2023
(73) Proprietor: NTT, Inc., Tokyo 100-8116 (JP)
(72) Inventor: OKUDA, Tetsuya, Musashino-shi, Tokyo 180-8585 (JP); DAN, Yuichiro, Musashino-shi, Tokyo 180-8585 (JP); SUZUKI, Ryohei, Musashino-shi, Tokyo 180-8585 (JP); CHIDA, Koji, Musashino-shi, Tokyo 180-8585 (JP)
(74) Representative: Murgitroyd & Company
(86) International application number: PCT/JP2020/041059
(87) International publication number: WO 2022/091409

(56) References cited:
- JP-A- 2001 290 780
- JP-A- 2006 018 753
- JP-A- 2017 004 122
- US-A1- 2014 033 278
- US-A1- 2014 173 755
- US-A1- 2019 325 129
- GEORGE COKER ET AL: "Principles of remote attestation", INTERNATIONAL JOURNAL OF INFORMATION SECURITY, SPRINGER, BERLIN, DE, vol. 10, no. 2, 23 April 2011 (2011-04-23), pages 63 - 81, XP019905825, ISSN: 1615-5270, DOI: 10.1007/S10207-011-0124-7

## Description

### [Technical Field]

The present invention relates to an authentication-control system, an authentication-control apparatus, an authentication-control method and a program.

### [Background Art]

OAuth is known as an authorization mechanism for controlling use of software resources such as video contents, audio contents, programs, or data. However, in the OAuth, authorization control cannot be performed on a software resource shared by a plurality of right holders (that is, there are a plurality of owners). Therefore, a mechanism for aggregating and controlling authorizations among right holders has been proposed (for example, Patent Document 1).

US2014/173755A1 describes an orchestrated access system that provides an access control decision function that is augmented by interfacing with a real-time collaborative communication system that maintains a state of various users' availability to communicate.

US2014/033278A1 discloses services gatekeeper systems and methods that allow mapping and protecting communication services APIs with OAuth and group access to user information. Such a system can include a plurality of applications, executing on one or more application servers. The services gatekeeper is operable to define a group of members using a group URI, intercept requests for access to communication services APIs, obtain authorization from a group owner for access to a specified communication services API for each member of the group, and enable access to the specified communication services API of each member of the group in accordance with the scope authorized by the group owner.

US2019/325129A1 discloses a method for performing multi-factor authentication in delegated authorization security model.

### [Related-Art Documents]

### [Patent Document]

Patent Document 1: WO2020/145163

### [Summary of Invention]

### [Problem to be Solved by the Invention]

On the other hand, there is a case where, with respect to a software resource that is allowed to be varied or modified (hereinafter, referred to as "changed") in the distribution process, it is desirable that a person who has made the change is added as a right holder of the software resource after the change.

However, in conventional technologies, it is difficult to add a new right holder in such a case.

The present invention has been made in view of the above points, and an object thereof is to appropriately control authorization for access to a software resource changed in a distribution process.

In order to solve the above problem, an authentication-control system is provided as claimed in claim 1.

An authentication-control method is provided as claimed in claim 3.

### [Effect of Invention]

Authorization for access to a software resource changed in a distribution process can be appropriately controlled.

### [Brief Description of Drawings]

[Fig. 1] Fig. 1 is a diagram illustrating an overall configuration example in an embodiment of the present invention.
[Fig. 2] Fig. 2 is a diagram illustrating a hardware configuration example of an authorization control server 10 in the embodiment of the present invention.
[Fig. 3] Fig. 3 is a diagram illustrating a functional configuration example of the authorization control server 10 in the embodiment of the present invention.
[Fig. 4] Fig. 4 is a diagram for explaining a first example of a processing procedure performed in the present embodiment.
[Fig. 5] Fig. 5 is a diagram illustrating a configuration example of a resource owner management DB 16.
[Fig. 6] Fig. 6 is a diagram for explaining a second example of a processing procedure performed in the present embodiment.

### [Mode for Carrying Out the Invention]

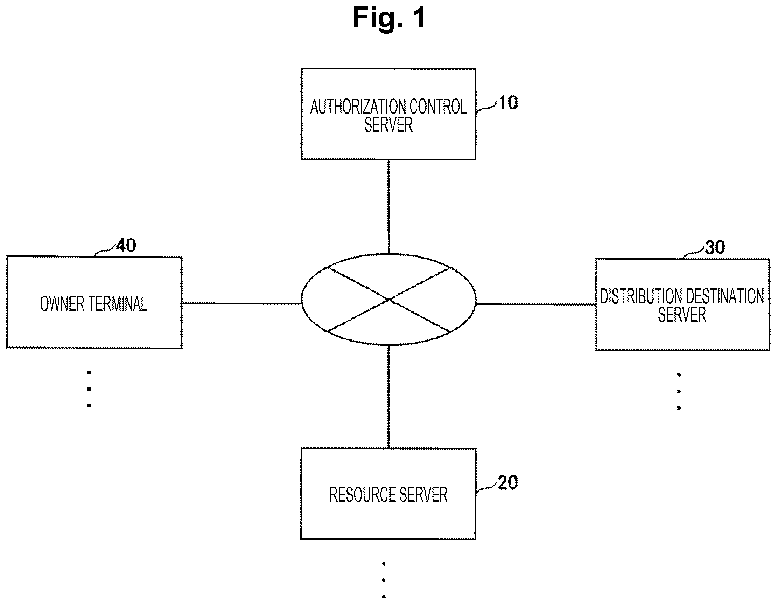

Hereinafter, an embodiment of the present invention will be described with reference to the drawings. Fig. 1 is a diagram illustrating an overall configuration example in an embodiment of the present invention. Fig. 1 illustrates one or more owner terminals 40, one or more distribution destination servers 30, one or more resource servers 20, and an authorization control server 10. For convenience, Fig. 1 illustrates that each server and each terminal are connected via a network, but the owner terminal 40 is only required to be able to communicate with the authorization control server 10.

The resource server 20 is one or more computers that store a software resource (hereinafter, simply referred to as a "resource") such as a program or electronic data as a target to be managed. The types of programs and electronic data are not limited to predetermined ones. For example, an artificial intelligence (AI) program may be an example of the resource. Learning data of an AI program may be an example of the resource. In the present embodiment, a resource that is allowed to be varied or modified (hereinafter, referred to as "changed") in the distribution process is preferable.

The owner terminal 40 is a terminal used by an owner of any resource stored in the resource server 20. For example, a personal computer (PC), a tablet terminal, a smartphone, or the like may be used as the owner terminal 40. The owner of a resource refers to a person (right holder) who has a right regarding use, change, or the like of the resource. Use or change of a certain resource requires permission of the owner of the resource. In the present embodiment, there may be a plurality of owners for one resource. For example, in a case where B creates a resource R1' by changing a resource R1 created by A, A and B are owners of the resource R1'.

The distribution destination server 30 includes one or more computers or terminals to which resources are distributed. The resource distributed (downloaded) to the distribution destination server 30 is used or changed by a person (hereinafter, simply referred to as a "user") who uses or changes the resource. Each user accesses the resource distributed to the distribution destination server 30 using each terminal.

The authorization control server 10 includes one or more computers that authorizes use of a resource distributed to the distribution destination server 30. Specifically, the authorization control server 10 inquires of each owner of the resource to be used or the like about permission or rejection for the use or the like of the resource. When the use or the like is permitted by each owner, the authorization control server 10 issues an access token for the resource to the distribution destination server 30.

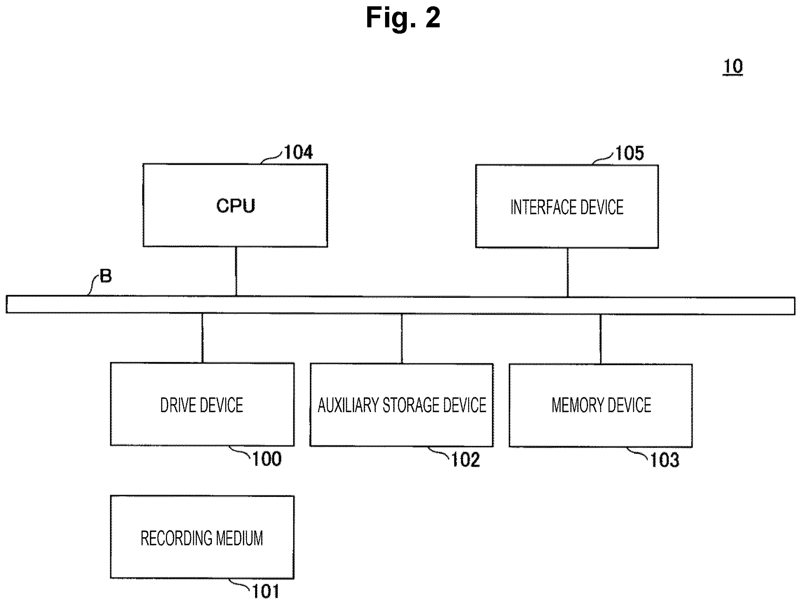

Fig. 2 is a diagram illustrating a hardware configuration example of the authorization control server 10 in the embodiment of the present invention. The authorization control server 10 in Fig. 2 includes a drive device 100, an auxiliary storage device 102, a memory device 103, a CPU 104, an interface device 105, and the like which are connected to each other by a bus B.

A program for implementing processing in the authorization control server 10 is provided by a recording medium 101 such as a compact disc read-only memory (CD-ROM). When the recording medium 101 storing the program is set in the drive device 100, the program is installed from the recording medium 101 to the auxiliary storage device 102 via the drive device 100. However, the program is not necessarily installed from the recording medium 101, and may be downloaded from another computer via a network. The auxiliary storage device 102 stores the installed program and also stores necessary files, data, and the like.

In a case where an instruction to start the program is made, the memory device 103 reads and stores the program from the auxiliary storage device 102. The CPU 104 performs a function related to the authorization control server 10 according to a program stored in the memory device 103. The interface device 105 is used as an interface for connecting to a network.

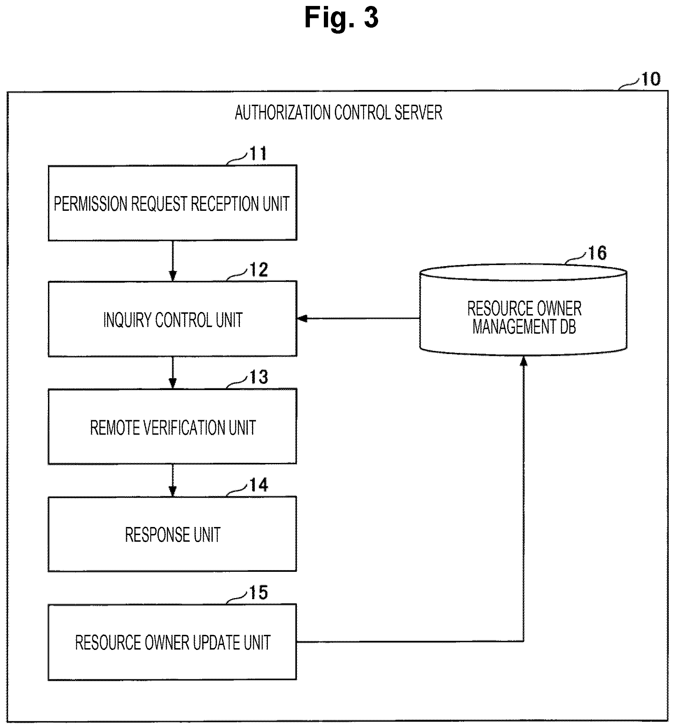

The distribution destination server 30, each resource server 20, and each owner terminal 40 may also have a hardware configuration as illustrated in Fig. 3.

Fig. 3 is a diagram illustrating a functional configuration example of the authorization control server 10 in the embodiment of the present invention. In Fig. 3, the authorization control server 10 includes a permission request reception unit 11, an inquiry control unit 12, a remote verification unit 13, a response unit 14, a resource owner update unit 15, and the like. Each of these units is implemented by processes that one or more programs installed in the authorization control server 10 cause the CPU 104 to execute. The authorization control server 10 also uses a database (storage unit) such as the resource owner management DB 16. The resource owner management DB 16 can be implemented by using, for example, the auxiliary storage device 102 or a storage device connectable to the authorization control server 10 via a network.

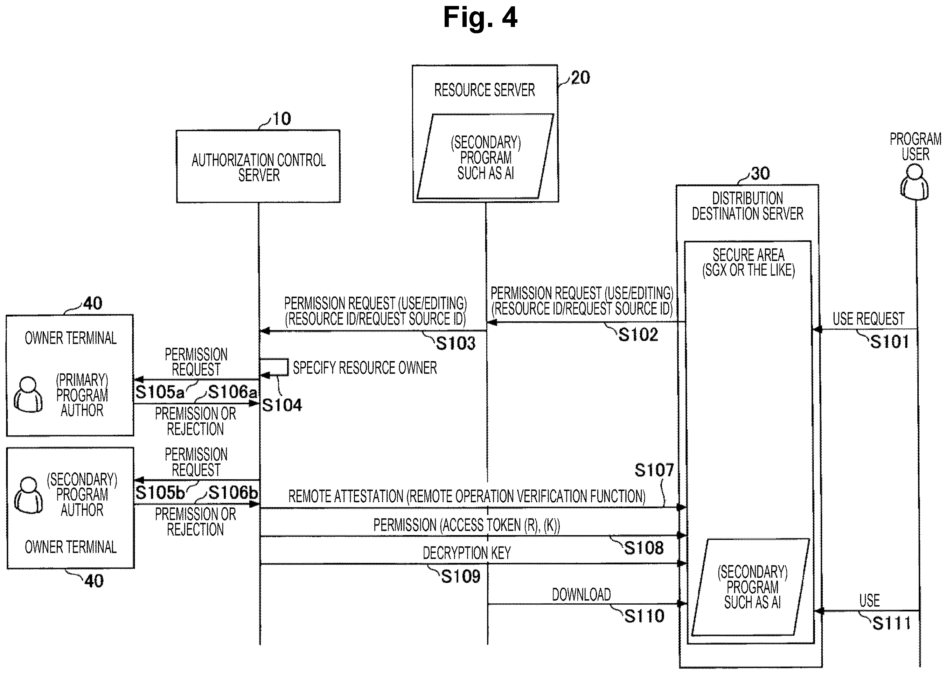

Fig. 4 is a diagram for explaining a first example of a processing procedure performed in the present embodiment. In Fig. 4, an example of a processing procedure performed in a case where a user (hereinafter, referred to as a "program user") uses a (secondary) program such as AI stored in a certain resource server 20 will be described. The (secondary) program such as AI is a secondary program. That is, the (secondary) program such as AI is a program (hereinafter, referred to as a "target resource") created by editing a program such as AI that has been created by a primary program author, by a secondary program author.

In step S101, a secure area of the distribution destination server 30 receives a use request of a target resource from a program user. The use request includes identification information (hereinafter, referred to as a "request source ID") of the program user and identification information (hereinafter, referred to as a "resource ID") of the target resource. The use request is transmitted from, for example, a terminal used by the program user. However, the distribution destination server 30 may be the terminal. The secure area is, for example, a type of trusted execution environment (TEE) such as Intel (registered trademark) Software Guard Extensions (SGX). It is assumed that the secure area satisfies conditions of "presence of an Enclave that cannot be tampered with", "establishment of E2E secure channel of Enclave with a user (cloud administrator cannot perform the MitM attack) (cf. remote attestation)", and "presence of a secure module in the Enclave from which a secret key is not released".

Subsequently, the secure area of the distribution destination server 30 transmits a permission request for use or editing of the target resource to the resource server 20 storing the target resource (S102). The permission request includes a resource ID and a request source ID. Subsequently, the resource server 20 transfers the permission request to the authorization control server 10 (S103).

When the permission request is received by the permission request reception unit 11 of the authorization control server 10, the inquiry control unit 12 controls an inquiry about permission to each owner of the target resource with respect to the permission request. Specifically, the inquiry control unit 12 first refers to the resource owner management DB 16 to specify the owner of the resource ID included in the permission request (S104).

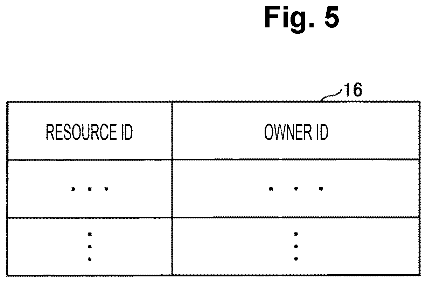

Fig. 5 is a diagram illustrating a configuration example of the resource owner management DB 16. As illustrated in Fig. 5, the resource owner management DB 16 stores an owner ID which is identification information of an owner of each resource stored in each resource server 20 in association with the resource ID of the resource. As described above, in the present embodiment, there may be a plurality of owners for one resource. Therefore, there is a possibility that a plurality of owner IDs are associated with one resource ID.

In step S104, the owner ID stored in the resource owner management DB 16 in association with the resource ID included in the permission request is specified. Here, not only the author of the (secondary) program such as AI which is the target resource but also the author of the (primary) program is specified as the owner of the target resource.

Subsequently, the inquiry control unit 12 of the authorization control server 10 transmits a permission request related to the use or editing of the target resource to the owner terminal 40 corresponding to each specified owner ID (S105a, S105b). Each owner terminal 40 notifies each user (owner) of the permission request (outputs the permission request to each user (owner)). Each owner inputs permission or rejection for the use or editing of the target resource, with reference to the permission request.

Subsequently, the inquiry control unit 12 receives a response including permission or rejection from each owner terminal 40 (S106a, S106b). The responses from the owner terminals 40 are received asynchronously.

When the response from any one of the owner terminals 40 of the transmission destination of the permission request indicates rejection, step S107 and subsequent steps are not performed. On the other hand, when the responses from all the owner terminals 40 of the transmission destination of the permission request indicate permission, the remote verification unit 13 of the authorization control server 10 verifies the validity of the secure area of the distribution destination server 30 (the validity of the transmission source of the permission request) by remote attestation (a remote operation verification function) (S107).

When the validity is confirmed, step S108 and subsequent steps are performed. In step S108, the response unit 14 transmits a response indicating permission to the distribution destination server 30. The response includes an access token (R) that is an access token for the target resource and an access token (K) that is an access token for a decryption key of the target resource.

In response to the reception of the response indicating permission, the secure area of the distribution destination server 30 acquires the decryption key by using the access token (K) from the authorization control server 10 also serving as the key management server (S109). That is, the secure area of the distribution destination server 30 transmits a decryption key acquisition request to the authorization control server 10. The acquisition request includes the access token (K). When the validity of the access token (K) is confirmed, the response unit 14 of the authorization control server 10 transmits the decryption key corresponding to the access token (K) to the secure area of the distribution destination server 30.

Subsequently, the secure area of the distribution destination server 30 downloads the target resource from the resource server 20 by using the access token (R) (S110). That is, the secure area of the distribution destination server 30 transmits an acquisition request of the target resource to the resource server 20. The acquisition request includes the access token (R). When the validity of the access token (R) is confirmed, the resource server 20 transmits the target resource corresponding to the access token (R) to the secure area of the distribution destination server 30. As a result, the target resource is stored in the secure area of the distribution destination server 30. At the time of confirming the validity of the access token (R), the resource server 20 requests the authorization control server 10 to verify the validity of the access token (R), and the authorization control server 10 performs the verification. The authorization control server 10 transmits a result of the verification to the resource server 20.

Thereafter, when a use instruction of the target resource is input from the program user (S111), the secure area of the distribution destination server 30 performs processing according to the use instruction. At this time, the target resource is decrypted with the decryption key.

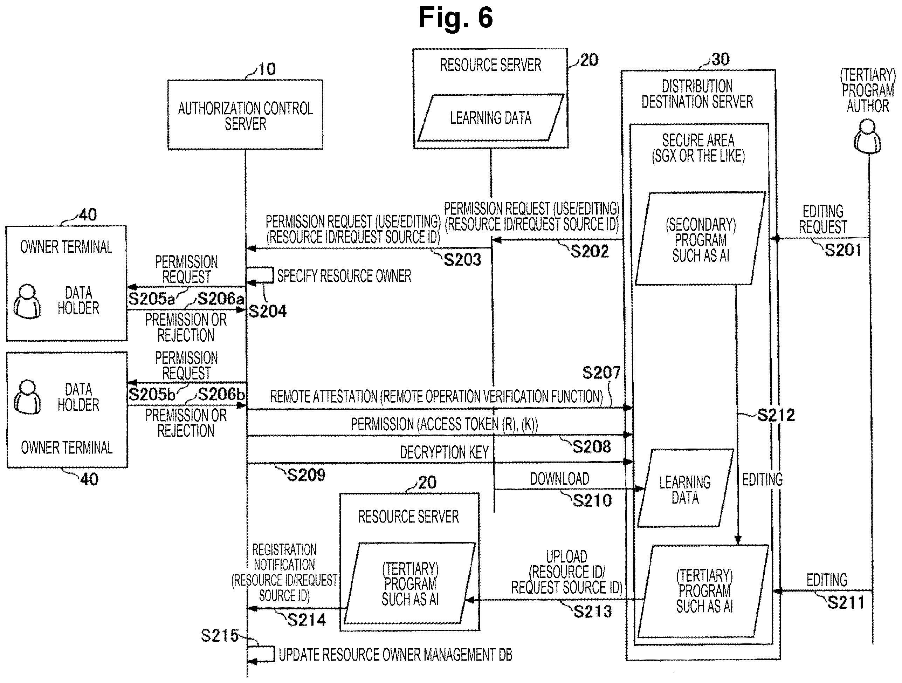

Fig. 6 is a diagram for explaining a second example of a processing procedure performed in the present embodiment. In Fig. 6, an example of a processing procedure performed in a case where a (tertiary) program such as AI is created by editing (additional learning or the like) the (secondary) program such as AI by using learning data (hereinafter, referred to as a "target resource") stored in another resource server 20 will be described. The user who instructs such editing is hereinafter referred to as a "(tertiary) program author".

In step S201, the secure area of the distribution destination server 30 receives an editing request of a (secondary) program such as AI from the (tertiary) program author. The editing request includes identification information (hereinafter, referred to as a "request source ID") of the (tertiary) program author and identification information (hereinafter, referred to as a "resource ID") of the target resource. Steps S102 to S110 of Fig. 4 are performed in response to the editing request or in response to an instruction by the (tertiary) program author before the editing request, and the (secondary) program such as AI is stored in the secure area of the distribution destination server 30.

Subsequently, the secure area of the distribution destination server 30 transmits a permission request for use or editing of the target resource to the resource server 20 storing the target resource (S202). The permission request includes a resource ID and a request source ID. Subsequently, the resource server 20 transfers the permission request to the authorization control server 10 (S203).

When the permission request is received by the permission request reception unit 11 of the authorization control server 10, the inquiry control unit 12 controls an inquiry about permission to each owner of the target resource with respect to the permission request. Specifically, the inquiry control unit 12 first refers to the resource owner management DB 16 (Fig. 5) to specify the owner of the resource ID included in the permission request (S204). Here, it is assumed that owner IDs of two data holders are specified as owners of the target resource.

Subsequently, the inquiry control unit 12 of the authorization control server 10 transmits a permission request related to the use or editing of the target resource to the owner terminal 40 corresponding to each specified owner ID (S205a, S205b). Each owner terminal 40 notifies each user (data holder) of the permission request (outputs the permission request to each user (data holder)). Each data holder inputs permission or rejection for the use or editing of the target resource, with reference to the permission request.

Subsequently, the inquiry control unit 12 receives a response including permission or rejection from each of the owner terminals 40 (S206a, S206b). The responses from the owner terminals 40 are received asynchronously.

When the response from any one of the owner terminals 40 of the transmission destination of the permission request indicates rejection, step S207 and subsequent steps are not performed. On the other hand, when the responses from all the owner terminals 40 of the transmission destination of the permission request indicate permission, the remote verification unit 13 of the authorization control server 10 verifies the validity of the secure area of the distribution destination server 30 (the validity of the transmission source of the permission request) (for example, verifies the PCR value) by remote attestation (a remote operation verification function) (S207).

When the validity is confirmed, step S208 and subsequent steps are performed. In step S208, the response unit 14 transmits a response indicating permission to the distribution destination server 30. The response includes an access token (R) that is an access token for the target resource and an access token (K) that is an access token for a decryption key of the target resource.

In response to the reception of the response indicating permission, the secure area of the distribution destination server 30 acquires the decryption key by using the access token (K) from the authorization control server 10 also serving as the key management server (S209). That is, the secure area of the distribution destination server 30 transmits a decryption key acquisition request to the authorization control server 10. The acquisition request includes the access token (K). When the validity of the access token (K) is confirmed, the response unit 14 of the authorization control server 10 transmits the decryption key corresponding to the access token (K) to the secure area of the distribution destination server 30.

Subsequently, the secure area of the distribution destination server 30 downloads the target resource from the resource server 20 by using the access token (R) (S210). That is, the secure area of the distribution destination server 30 transmits an acquisition request of the target resource to the resource server 20. The acquisition request includes the access token (R). When the validity of the access token (R) is confirmed, the resource server 20 transmits the target resource corresponding to the access token (R) to the secure area of the distribution destination server 30. As a result, the target resource is stored in an encrypted manner in the secure area of the distribution destination server 30.

Thereafter, when an execution instruction of editing (relearning using the target resource) of the (secondary) program such as AI is input from the (tertiary) program author (S211), the secure area of the distribution destination server 30 generates a (tertiary) program such as AI by performing processing according to the editing instruction (S212).

Subsequently, the secure area of the distribution destination server 30 uploads the (tertiary) program such as AI, the resource ID of the (secondary) program such as AI, and the request source ID of the (tertiary) program author to any one of the resource servers 20 (S213). The resource server 20 stores the (tertiary) program such as AI as a target to be managed. Before upload, the target resource is encrypted in the secure area, and the decryption key is managed by the authorization control server 10. The resource server 20 may be the same as or different from the resource server 20 that stores the (secondary) program such as AI.

Subsequently, the resource server 20 transmits a notification of registration of the (tertiary) program such as AI to the authorization control server 10 (S214). The registration notification includes a resource ID of the (secondary) program such as AI, a resource ID of the (tertiary) program such as AI, and a request source ID of the (tertiary) program such as AI author. Upon receiving the registration notification, the resource owner update unit 15 of the authorization control server 10 updates the resource owner management DB 16 (S215). Specifically, the resource owner update unit 15 specifies the owner ID stored in the resource owner management DB 16 in association with the resource ID of the (secondary) program such as AI included in the registration notification. The resource owner update unit 15 registers the resource ID of the (tertiary) program such as AI included in the registration notification in the resource owner management DB 16 in association with the specified owner ID and the request source ID of the (tertiary) program author included in the registration notification. That is, the owner group of the (secondary) program such as AI and the (tertiary) program author are registered in the resource owner management DB 16 as the owner of the (tertiary) program such as AI.

After the end of the use or editing of the target resource, the target resource and the decryption key are deleted from the secure area of the distribution destination server 30.

As described above, according to the present embodiment, when permission of all resource owners is obtained for a certain resource, access (use, editing, or the like) to the resource is permitted. For the resource after the change, in addition to the owner of the resource before the change, the person who has made the change is also added to the owner. Accordingly, it is possible to appropriately control authorization for access to a software resource changed in a distribution process. That is, authorization control corresponding to a case where the resource owner is added/changed asynchronously after the resource is distributed becomes possible.

In the distribution destination server 30, resources are accessed in the secure area. Accordingly, it is possible to perform remote authorization control on the client even after the resource is distributed or the resource is changed.

In the present embodiment, the authorization control server 10 is an example of an authentication-control system and an authentication-control apparatus. The resource owner update unit 15 is an example of a registration unit. The remote verification unit 13 is an example of a verification unit.

Although the embodiment of the present invention has been described in detail above, the present invention is not limited to such specific embodiment, and various modifications and changes can be made within the scope of the present invention described in the claims.

### Reference Signs List

- 10: Authorization control server
- 11: Permission request reception unit
- 12: Inquiry control unit
- 13: Remote verification unit
- 14: Response unit
- 15: Resource owner update unit
- 16: Resource owner management DB
- 20: Resource server
- 30: Distribution destination server
- 40: Owner terminal
- 100: Drive device
- 101: Recording medium
- 102: Auxiliary storage device
- 103: Memory device
- 104: CPU
- 105: Interface device
- B: Bus

## Claims

1. An authentication-control system (10) including one or more computers, the authentication-control system comprising:
a registration unit (15) that, in response to receiving a notification of registration of a software resource after the software resource changes, registers, in a storage unit (16) a person who has made the change as a right holder of the software resource after the software resource changes, together with a right holder of the software resource before the software resource changes;
an inquiry control unit (12) that, in response to a permission request for use or editing of the software resource, controls an inquiry as to permission or rejection to right holders registered in the storage unit regarding the software resource; and
a response unit (14) that makes a response indicating permission for the permission request when permission is obtained from all the right holders,
wherein the storage unit (16) stores resource identifications, IDs, and owner identifications ,IDs, in association with one another,
wherein the notification of registration received by the registration unit (15) includes:
an ID of the software resource before the software resource changes, and
an ID of the person that has made the change, and
wherein the registration unit (15) specifies an owner ID in association with the ID of the software resource that is included in the notification of registration and that is stored in the storage unit (16), and updates the storage unit (16) so that the storage unit (16) stores the specified owner ID in association with the ID of the person included in the notification of registration.

2. The authentication-control system according to claim 1, further comprising:
a verification unit (13) that remotely verifies a secure area of a device that is a transmission source of the permission request,
wherein the response unit (14) makes the response indicating permission when validity of the secure area is confirmed by the remote verification.

3. An authentication-control method in which a computer performs:
a registration step of, in response to receiving a notification of registration of a software resource after the software resource changes, registering in a storage unit (16) a person who has made the change as a right holder of the software resource after the software resource changes, together with a right holder of the software resource before the software resource changes;
an inquiry control step of, in response to a permission request for use or editing of the software resource, controlling an inquiry as to permission or rejection to right holders registered in the storage unit regarding the software resource; and
a response step of making a response indicating permission for the permission request when permission is obtained from all the right holders,
wherein the storage unit (16) stores resource identifications, IDs, and owner identifications, IDs, in association with one another,
wherein the notification of registration received in the registration step includes:
an ID of the software resource before the software resource changes, and
an ID of the person that has made the change, and
wherein the registration step includes specifying an owner ID in association with the ID of the software resource that is included in the notification of registration and that is stored in the storage unit (16), and updating the storage unit (16) so that the storage unit (16) stores the specified owner ID in association with the ID of the person included in the notification of registration.

4. The authentication-control method according to claim 3, further comprising:
a verification step of remotely verifing a secure area of a device that is a transmission source of the permission request,
wherein, in the response step, a response indicating permission is made when validity of the secure area is confirmed by the remote verification.

5. A program causing a computer to execute the authentication-control method according to claim 3 or 4.

## Patentansprüche

1. Ein Authentifizierungssteuerungssystem (10), das einen oder mehrere Computer umfasst, wobei das Authentifizierungssteuerungssystem Folgendes beinhaltet:
eine Registrierungseinheit (15), die als Antwort auf das Empfangen einer Benachrichtigung über die Registrierung einer Software-Ressource nach einer Änderung der Software-Ressource in einer Speichereinheit (16) eine Person, die die Änderung vorgenommen hat, als einen Rechteinhaber der Software-Ressource nach der Änderung der Software-Ressource, zusammen mit einem Rechteinhaber der Software-Ressource vor der Änderung der Software-Ressource registriert;
eine Anfragesteuerungseinheit (12), die als Antwort auf eine Erlaubnisanforderung zur Verwendung oder Bearbeitung der Software-Ressource eine Anfrage nach Erlaubnis oder Ablehnung an Rechteinhaber, die in der Speichereinheit registriert sind, bezüglich der Software-Ressource steuert; und
eine Antworteinheit (14), die eine Antwort ausgibt, die die Erlaubnis für die Erlaubnisanforderung angibt, wenn die Erlaubnis von allen Rechteinhabern erhalten wird,
wobei die Speichereinheit (16) Ressourcenidentifizierungen, IDs, und
Eigentümeridentifizierungen, IDs, miteinander assoziiert speichert,
wobei die von der Registrierungseinheit (15) empfangene Benachrichtigung über die Registrierung Folgendes umfasst:
eine ID der Software-Ressource vor der Änderung der Software-Ressource, und
eine ID der Person, die die Änderung vorgenommen hat, und
wobei die Registrierungseinheit (15) eine Eigentümer-ID in Assoziation mit der ID der Software-Ressource spezifiziert, die in der Benachrichtigung über die Registrierung enthalten ist und die in der Speichereinheit (16) gespeichert ist, und die Speichereinheit (16) aktualisiert, sodass die Speichereinheit (16) die spezifizierte Eigentümer-ID in Assoziation mit der ID der Person speichert, die in der Benachrichtigung über die Registrierung enthalten ist.

2. Authentifizierungssteuerungssystem gemäß Anspruch 1, das ferner Folgendes beinhaltet:
eine Verifizierungseinheit (13), die einen sicheren Bereich einer Vorrichtung, die eine Übertragungsquelle der Erlaubnisanforderung ist, aus der Ferne verifiziert,
wobei die Antworteinheit (14) die Antwort ausgibt, die die Erlaubnis angibt, wenn die Gültigkeit des sicheren Bereichs durch die Fernverifizierung bestätigt wird.

3. Ein Verfahren zur Authentifizierungssteuerung, wobei ein Computer Folgendes durchführt:
einen Registrierungsschritt, als Antwort auf das Empfangen einer Benachrichtigung über die Registrierung einer Software-Ressource nach einer Änderung der Software-Ressource, des Registrierens in einer Speichereinheit (16) einer Person, die die Änderung vorgenommen hat, als eines Rechteinhabers der Software-Ressource nach der Änderung der Software-Ressource zusammen mit einem Rechteinhaber der Software-Ressource vor der Änderung der Software-Ressource;
einen Anfragesteuerungsschritt, als Antwort auf eine Erlaubnisanforderung zur Verwendung oder Bearbeitung der Software-Ressource, des Steuerns einer Anfrage nach Erlaubnis oder Ablehnung an Rechteinhaber, die in der Speichereinheit registriert sind, bezüglich der Software-Ressource; und
einen Antwortschritt des Vornehmens einer Antwort, die die Erlaubnis für die Erlaubnisanforderung angibt, wenn die Erlaubnis von allen Rechteinhabern erhalten wird,
wobei die Speichereinheit (16) Ressourcenidentifizierungen, IDs, und
Eigentümeridentifizierungen, IDs, miteinander assoziiert speichert,
wobei die in dem Registrierungsschritt empfangene Benachrichtigung über die Registrierung Folgendes umfasst:
eine ID der Software-Ressource vor der Änderung der Software-Ressource, und
eine ID der Person, die die Änderung vorgenommen hat, und
wobei der Registrierungsschritt das Spezifizieren einer Eigentümer-ID in Assoziation mit der ID der Software-Ressource, die in der Benachrichtigung über die Registrierung enthalten ist und die in der Speichereinheit (16) gespeichert ist, und das Aktualisieren der Speichereinheit (16), sodass die Speichereinheit (16) die spezifizierte Eigentümer-ID in Assoziation mit der ID der Person speichert, die in der Benachrichtigung über die Registrierung enthalten ist, umfasst.

4. Authentifizierungssteuerungsverfahren gemäß Anspruch 3, das ferner Folgendes beinhaltet:
einen Verifizierungsschritt des Verifizierens aus der Ferne eines sicheren Bereichs einer Vorrichtung, die eine Übertragungsquelle der Erlaubnisanforderung ist,
wobei in dem Antwortschritt eine Antwort ausgegeben wird, die eine Erlaubnis angibt, wenn die Gültigkeit des sicheren Bereichs durch die Fernverifizierung bestätigt wird.

5. Ein Programm, das bewirkt, dass ein Computer das Authentifizierungssteuerungsverfahren gemäß Anspruch 3 oder 4 ausführt.

## Revendications

1. Un système de contrôle d'authentification (10) incluant un ou plusieurs ordinateurs, le système de contrôle d'authentification comprenant :
une unité d'enregistrement (15) qui, en réponse à la réception d'une notification d'enregistrement d'une ressource logicielle après un changement de la ressource logicielle, enregistre, dans une unité de stockage (16), une personne qui a apporté le changement en tant que titulaire de droit de la ressource logicielle après le changement de la ressource logicielle, conjointement avec un titulaire de droit de la ressource logicielle avant le changement de la ressource logicielle ;
une unité de contrôle d'interrogation (12) qui, en réponse à une demande de permission pour utiliser ou éditer la ressource logicielle, contrôle une interrogation quant à la permission ou au refus de titulaires de droit enregistrés dans l'unité de stockage concernant la ressource logicielle ; et
une unité de réponse (14) qui apporte une réponse indiquant la permission pour la demande de permission lorsque la permission est obtenue de tous les titulaires de droit,
où l'unité de stockage (16) stocke des identificateurs, ID, de ressource, et des identificateurs, ID, de propriétaire, en association les uns avec les autres,
où la notification d'enregistrement reçue par l'unité d'enregistrement (15) inclut :
un ID de la ressource logicielle avant le changement de la ressource logicielle, et
un ID de la personne qui a apporté le changement, et
où l'unité d'enregistrement (15) spécifie un ID de propriétaire en association avec l'ID de la ressource logicielle qui est inclus dans la notification d'enregistrement et qui est stocké dans l'unité de stockage (16), et met à jour l'unité de stockage (16) de sorte que l'unité de stockage (16) stocke l'ID de propriétaire spécifié en association avec l'ID de la personne inclus dans la notification d'enregistrement.

2. Le système de contrôle d'authentification selon la revendication 1, comprenant en outre :
une unité de vérification (13) qui vérifie à distance une zone sécurisée d'un dispositif qui est une source de transmission de la demande de permission,
où l'unité de réponse (14) apporte la réponse indiquant la permission lorsque la validité de la zone sécurisée est confirmée par la vérification distante.

3. Un procédé de contrôle d'authentification dans lequel un ordinateur effectue :
une étape d'enregistrement consistant, en réponse à la réception d'une notification d'enregistrement d'une ressource logicielle après un changement de la ressource logicielle, à enregistrer dans une unité de stockage (16) une personne qui a apporté le changement en tant que titulaire de droit de la ressource logicielle après le changement de la ressource logicielle, conjointement avec un titulaire de droit de la ressource logicielle avant le changement de la ressource logicielle ;
une étape de contrôle d'interrogation consistant, en réponse à une demande de permission pour utiliser ou éditer la ressource logicielle, à contrôler une interrogation quant à la permission ou au refus de titulaires de droit enregistrés dans l'unité de stockage concernant la ressource logicielle ; et
une étape de réponse consistant à apporter une réponse indiquant la permission pour la demande de permission lorsque la permission est obtenue de tous les titulaires de droit,
où l'unité de stockage (16) stocke des identificateurs, ID, de ressource, et des identificateurs, ID, de propriétaire, en association les uns avec les autres,
où la notification d'enregistrement reçue à l'étape d'enregistrement inclut :
un ID de la ressource logicielle avant le changement de la ressource logicielle, et
un ID de la personne qui a apporté le changement, et
où l'étape d'enregistrement inclut la spécification d'un ID de propriétaire en association avec l'ID de la ressource logicielle qui est inclus dans la notification d'enregistrement et qui est stocké dans l'unité de stockage (16), et la mise à jour de l'unité de stockage (16) de sorte que l'unité de stockage (16) stocke l'ID de propriétaire spécifié en association avec l'ID de la personne inclus dans la notification d'enregistrement.

4. Le procédé de contrôle d'authentification selon la revendication 3, comprenant en outre :
une étape de vérification consistant à vérifier à distance une zone sécurisée d'un dispositif qui est une source de transmission de la demande de permission,
où, à l'étape de réponse, une réponse indiquant la permission est apportée lorsque la validité de la zone sécurisée est confirmée par la vérification distante.

5. Un programme amenant un ordinateur à exécuter le procédé de contrôle d'authentification selon la revendication 3 ou la revendication 4.
